# EUROPEAN PATENT APPLICATION

(11) **EP 4 535 215 A1**
(43) Date of publication of application: **09.04.2025**
(21) Application number: 22943547.4
(22) Date of filing: 07.12.2022
(51) Int. Cl.: G06F 30/20

(54) **SIMULATION SYSTEM AND METHOD FOR HYDROGEN PRODUCTION BY WATER ELECTROLYSIS**

(30) Priority: 24.05.2022 CN 202210574362
(71) Applicant: Sungrow (Shanghai) Co., Ltd., Shanghai 201203 (CN)
(72) Inventor: XU, Zeyang, Shanghai 201203 (CN); WENG, Jie, Shanghai 201203 (CN); XUE, Bowei, Shanghai 201203 (CN)
(74) Representative: Zacco Norway AS
(86) International application number: PCT/CN2022/137224
(87) International publication number: WO 2023/226360

(57) **Abstract**

A simulation system and method for hydrogen production by water electrolysis. The simulation system for hydrogen production by water electrolysis comprises: a first simulation unit used for simulating a hydrogen production power system to obtain hydrogen production electrical parameters; a controller unit used for outputting a control instruction to control hydrogen production process parameters in a hydrogen production chemical system; a second simulation unit used for simulating the hydrogen production chemical system according to the hydrogen production electrical parameters and the control instruction so as to obtain a hydrogen production result; and a data interaction unit, the first simulation unit, the controller unit, and the second simulation unit being capable of performing data interaction by means of the data interaction unit. Joint simulation of complete chemical and electrical processes for hydrogen production by water electrolysis can be realized.

## Description

This application claims the priority to Chinese patent application No. 202210574362.6, titled "SIMULATION SYSTEM AND METHOD FOR HYDROGEN PRODUCTION BY WATER ELECTROLYSIS", filed on May 24, 2022, with the China National Intellectual Property Administration, which is incorporated herein by reference in its entirety.

### FIELD

The present disclosure relates to simulation technology and in particular to a simulation system and a simulation method for hydrogen production by water electrolysis.

### BACKGROUND

Hydrogen production by water electrolysis is to electrolyze water into hydrogen and oxygen, during which no contaminated gas is produced, and therefore the hydrogen production by water electrolysis is very significant in the current hydrogen production field.

The hydrogen production by water electrolysis relates to various scenarios such as electrical process, thermodynamic process, and chemical process, and relates to a large number of systems. Therefore, simulation analysis becomes particularly important. However, it is difficult to simulate a complete process involved in the hydrogen production by water electrolysis with existing simulation systems.

### SUMMARY

A simulation system and a simulation method for hydrogen production by water electrolysis are provided according to the present disclosure, to simulate a complete process involved a hydrogen production by water electrolysis.

In a first aspect, a simulation system for hydrogen production by water electrolysis is provided according to an embodiment of the present disclosure, and the simulation system for hydrogen production by water electrolysis includes:
a first simulation unit configured to simulate a power system for hydrogen production to obtain a hydrogen-production electrical parameter;
a controller unit configured to output a control instruction to control a hydrogen-production process parameter in a chemical system for hydrogen production;
a second simulation unit configured to simulate the chemical system for hydrogen production based on the hydrogen-production electrical parameter and the control instruction to obtain a hydrogen production result; and
a data interaction unit, where the first simulation unit, the controller unit, and the second simulation unit perform data interaction with each other through the data interaction unit.

In an embodiment, the data interaction unit is further configured to control the one with a smaller simulation step size of the first simulation unit and the second simulation unit to operate first, if the first simulation unit is different from the second simulation unit in simulation step size.

In an embodiment, the data interaction unit is provided with a first data interface adapted to the first simulation unit, a second data interface adapted to the second simulation unit, and a third data interface adapted to the controller unit.

In an embodiment, the data interaction unit is further configured to perform data conversion and adaptation on the first simulation unit, the second simulation unit, and the controller unit.

In an embodiment, the first simulation unit, the controller unit, and the second simulation unit performing data interaction with each other through the data interaction unit includes:
sending, by the first simulation unit, the hydrogen-production electrical parameter to the data interaction unit, performing, by the data interaction unit, data conversion on the hydrogen-production electrical parameter, and sending, by the data interaction unit, a converted hydrogen-production electrical parameter to the second simulation unit;
sending, by the controller unit, the control instruction to the data interaction unit, performing, by the data interaction unit, data conversion on the control instruction, and sending, by the data interaction unit, a converted control instruction to the second simulation unit; and
sending, by the second simulation unit, the hydrogen production result to the data interaction unit, performing, by the data interaction unit, data conversion on the hydrogen production result, and sending, by the data interaction unit, a converted hydrogen production result to the controller unit.

In an embodiment, the hydrogen production result includes feedback on the hydrogen-production process parameter, and the controller unit is configured to modify the control instruction based on the feedback on the hydrogen-production process parameter.

In an embodiment, the data interaction unit is a first controller equipped with a software environment of Python, C++, or java.

In an embodiment, the controller unit includes a programmable logic controller.

In an embodiment, the first simulation unit is a second controller equipped with a universal model for multi-domain systems.

In an embodiment, the first simulation unit includes a thermodynamics module, a renewable energy module, a hydrogen-production power module, and an electrolyzer module;
the renewable energy module is connected to the hydrogen-production power module and is configured to simulate power generation with the renewable energy;
the hydrogen-production power module is connected to the electrolyzer module and is configured to supply power for the electrolyzer module;
the thermodynamics module is connected to the electrolyzer module and is configured to obtain a temperature of the electrolyzer module.

In an embodiment, the second simulation unit is a third controller equipped with process simulation software.

In an embodiment, the second simulation unit includes: a first circulation loop and a second circulation loop. The first circulation loop is formed by an electrolyzer, a gas-liquid separation cooler for hydrogen, and a lye circulating pump that are connected end to end sequentially through a pipeline. The second circulation loop is formed by a gas-liquid separation cooler for oxygen, the electrolyzer, and the lye circulating pump that are connected end to end sequentially through a pipeline.

In a second aspect, a simulation method for hydrogen production by water electrolysis is further provided according to an embodiment of the present disclosure, and is performed by the simulation system for hydrogen production by water electrolysis according to the first aspect. The simulation method for hydrogen production by water electrolysis includes:
simulating, by a first simulation unit, a power system for hydrogen production to obtain a hydrogen-production electrical parameter;
outputting, by a controller unit, a control instruction to control a hydrogen-production process parameter in a chemical system for hydrogen production;
sending, by a data interaction unit, the hydrogen-production electrical parameter and the control instruction to a second simulation unit; and
simulating, by the second simulation unit, the chemical system for hydrogen production based on the hydrogen-production electrical parameter and the control instruction to obtain a hydrogen production result.

In an embodiment, the simulation method for hydrogen production by water electrolysis further includes: controlling the one with a smaller simulation step size of the first simulation unit and the second simulation unit to operate first and controlling the other with a larger simulation step size to operate later, if the first simulation unit is different from the second simulation unit in simulation step size.

In an embodiment, after the simulating, by the second simulation unit, the chemical system for hydrogen production based on the hydrogen-production electrical parameter and the control instruction to obtain a hydrogen production result, the simulation method further includes:
sending, by the data interaction unit, the hydrogen production result to the controller unit, where the hydrogen production result includes feedback on the hydrogen-production process parameter; and
modifying, by the controller unit, the control instruction based on the feedback on the hydrogen-production process parameter.

In an embodiment, before the simulating, by a first simulation unit, a power system for hydrogen production to obtain a hydrogen-production electrical parameter, the simulation method further includes:
determining whether a simulation duration is less than a preset value;
performing the step of simulating, by the first simulation unit, the power system for hydrogen production to obtain the hydrogen-production electrical parameter if the simulation duration is less than a preset value; and ending the simulation process if the simulation duration is greater than or equal to the preset value.

After the sending, by the data interaction unit, the hydrogen production result to the controller unit, the simulation method further includes:
continuing to the operation of determining whether a simulation duration is less than a preset value.

According to technical solutions of the embodiments of the present disclosure, the simulation system for hydrogen production by water electrolysis includes the first simulation unit, the controller unit, the second simulation unit, and the data interaction unit. The first simulation unit is configured to simulate a power system for hydrogen production to obtain a hydrogen-production electrical parameter. The controller unit is configured to output a control instruction to control a hydrogen-production process parameter in a chemical system for hydrogen production. The second simulation unit is configured to simulate the chemical system for hydrogen production based on the hydrogen-production electrical parameter and the control instruction to obtain a hydrogen production result. The first simulation unit, the controller unit, and the second simulation unit perform data interaction with each other through the data interaction unit. The power system for hydrogen production is simulated by the first simulation unit. The chemical system for hydrogen production is simulated by the second simulation unit. The control involved in the hydrogen production process is implemented by the controller unit. Data transmission and data interaction among different simulation units and controller units are implemented by the data interaction unit. That is, the first simulation unit, the second simulation unit, and the controller unit can perform data interaction with each other through the data interaction unit, so as to simulate the complete process of the hydrogen production by water electrolysis.

### BRIEF DESCRIPTION OF THE DRAWINGS

FIG. 1 is a schematic structural diagram showing a simulation system for hydrogen production by water electrolysis according to an embodiment of the present disclosure;
FIG. 2 is a schematic structural diagram showing a power system for hydrogen production in a first simulation unit according to an embodiment of the present disclosure;
FIG. 3 is a schematic structural diagram showing a chemical system for hydrogen production in a second simulation unit according to an embodiment of the present disclosure;
FIG. 4 is a flowchart of a simulation method for hydrogen production by water electrolysis according to an embodiment of the present disclosure;
FIG. 5 is a flowchart of a simulation method for hydrogen production by water electrolysis according to another embodiment of the present disclosure.

### DETAILED DESCRIPTION OF THE EMBODIMENTS

Hereinafter, the present disclosure is further described in detail by embodiments with reference to the drawings. It should be understood that the embodiments described herein are only for explaining the present disclosure, rather than limiting the present disclosure. In addition, it should be noted that only some structures related to the present disclosure rather than all structures are shown in the drawings, for ease of description.

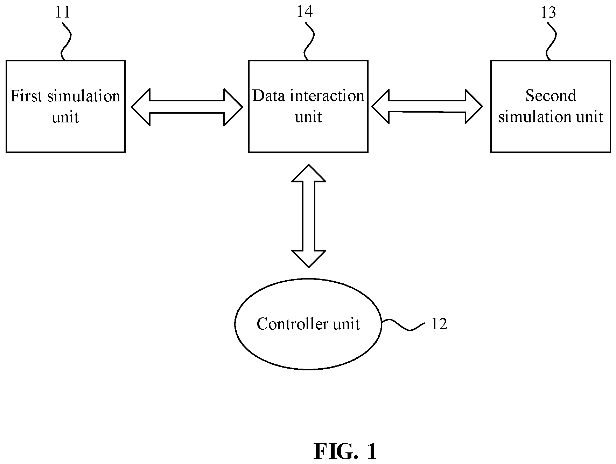

FIG. 1 is a schematic structural diagram showing a simulation system for hydrogen production by water electrolysis according to an embodiment of the present disclosure. Referring to the FIG. 1, the simulation system for hydrogen production by water electrolysis includes a first simulation unit 11, a controller unit 12, a second simulation unit 13, and a data interaction unit 14. The first simulation unit 11 is configured to simulate a power system for hydrogen production to obtain a hydrogen-production electrical parameter. The controller unit 12 is configured to output a control instruction to control a hydrogen-production process parameter in a chemical system for hydrogen production. The second simulation unit 13 is configured to simulate the chemical system for hydrogen production based on the hydrogen-production electrical parameter and the control instruction to obtain a hydrogen production result. The first simulation unit 11, the controller unit 12, and the second simulation unit 13 perform data interaction with each other through the data interaction unit 14.

In an embodiment, in a hydrogen production process by water electrolysis, water in the electrolyzer is electrolyzed into hydrogen and oxygen by applying direct current power across an electrolyzer. The power system for hydrogen production is used to simulate an electrical portion involved in the hydrogen production process and provide the hydrogen-production electrical parameter to the chemical system for hydrogen production. For example, the hydrogen-production electrical parameter may be at least one of power, voltage, or current, which is not limited in the present disclosure. The power system for hydrogen production is simulated by a professional power system simulation platform, thereby greatly improving accuracy of the simulation. The chemical system for hydrogen production is used to simulate all chemical processes in the hydrogen production process, such as controlling the hydrogen-production process parameter (where the hydrogen-production process parameter may include temperature, liquid level, flow quantity, pressure, and so on) in response to a received control instruction and simulating a hydrogen production result based on the hydrogen-production electrical parameter and the control instruction, where the hydrogen production result may include, e.g., rate of hydrogen production, material information of gas-liquid separation, and lye temperature. The chemical system for hydrogen production is simulated by a professional chemical system simulation platform, thereby improving the accuracy of the simulation. The controller unit 12 may output the control instruction to control various parameters, such as information of cooling water flow rate, in the chemical system for hydrogen production. The first simulation unit 11, the controller unit 12, and the second simulation unit 13 are different in interface, and thus fail to directly interact with each other, thus failing to achieve co-simulation. Therefore, in this embodiment, the data interaction unit 14 is configured to implement as an interface environment. The data interaction unit 14 is provided with a first data interface adapted to the first simulation unit 11, a second data interface adapted to the second simulation unit 13, and a third data interface adapted to the controller unit 12, so that any of the first simulation unit 11, the second simulation unit 13, and the controller unit 12 can interact with the data interaction unit 14. That is, the first simulation unit 11, the second simulation unit 13, and the controller unit 12 can perform data interaction with each other through the data interaction unit 14, so as to simulate the complete process of the hydrogen production by water electrolysis. Since the controller unit 12 is a hardware platform, the co-simulation of software and hardware is further implemented through the data interaction unit 14 in the present disclosure.

In the technical solution of this embodiment, the simulation system for hydrogen production by water electrolysis includes the first simulation unit, the controller unit, the second simulation unit, and the data interaction unit. The first simulation unit is configured to simulate the power system for hydrogen production to obtain the hydrogen-production electrical parameter. The controller unit is configured to output the control instruction to control the hydrogen-production process parameter in the chemical system for hydrogen production. The second simulation unit is configured to simulate the chemical system for hydrogen production based on the hydrogen-production electrical parameter and the control instruction to obtain the hydrogen production result. The first simulation unit, the controller unit, and the second simulation unit perform data interaction with each other through the data interaction unit. The power system for hydrogen production is simulated by the first simulation unit. The chemical system for hydrogen production is simulated by the second simulation unit. The control involved in the hydrogen production process is implemented by the controller unit. Data transmission and data interaction among different simulation units and controller units are implemented by the data interaction unit. That is, the first simulation unit, the second simulation unit, and the controller unit can perform data interaction with each other through the data interaction unit, so as to simulate the complete process of the hydrogen production by water electrolysis. With the co-simulation method of software and hardware, cost of design, experiment, and testing in product development by green hydrogen production can be greatly reduced, development speed can be improved, and a technical direction of forward design and development based on models in a hydrogen production industry can be guided.

It should be noted that this embodiment takes an example for illustration in which the first simulation unit simulates the power system for hydrogen production and the second simulation unit simulates the chemical system for hydrogen production. In other implementations, a co-simulation unit is further provided to simulate both of the power system for hydrogen production and the chemical system for hydrogen production. The co-simulation unit may perform data interaction with the controller unit through the data interaction unit.

The controller unit 12 may be, e.g., a PLC, a DSP, an ARM or a server, which is not limited in the present disclosure.

In an embodiment, the data interaction unit 14 is further configured to control the one with a smaller simulation step size of the first simulation unit and the second simulation unit to operate first, if the first simulation unit 11 is different from the second simulation unit 13 in simulation step size.

In an embodiment, the co-simulation fails to be directly performed if the first simulation unit 11 is different from the second simulation unit 13 in simulation step size. The one with a smaller simulation step size of the first simulation unit and the second simulation unit first operates, and then the other with a larger simulation step size operates, thus achieving the co-simulation of the first simulation unit 11 and the second simulation unit 13. In this embodiment, the first simulation unit 11 is a simulation platform for the power system for hydrogen production. The simulation platform for the power system usually has a small step size, e.g., a calculation step size is 10e-6 seconds, while a calculation step size of the chemical system is usually in seconds, and thus the co-simulation of the first simulation unit 11 and the second simulation unit 13 is of great difficulty. Therefore, in this embodiment, the data interaction unit 14 is configured to call the first simulation unit 11 to simulate the hydrogen-production electrical parameter first, and then call the second simulation unit 13 to perform simulation based on the hydrogen-production electrical parameter and the control instruction. That is, simulation of the first simulation unit 11 is performed first, and simulation of the second simulation unit 13 is performed later, so as to solve the problem of failing to achieve the co-simulation due to different simulation step sizes.

In an embodiment, the data interaction unit 14 is provided with the first data interface adapted to the first simulation unit 11, the second data interface adapted to the second simulation unit 13, and the third data interface adapted to the controller unit.

In an embodiment, the data interaction unit 14 is provided with different data interfaces to achieve data transmission between different modules. For instance, if the first simulation unit 11 includes a universal model for multi-domain systems, the first data interface may be configured as e.g., an API or FMI. If the second simulation unit 13 includes process simulation software, the second data interface may be configured as API, FMI, ActiveX COM interface, and so on. If the controller unit 12 is a programmable logic controller (PLC), the third data interface may be configured as a Modbus interface, an IEC104 interface, and so on.

In an embodiment, the data interaction unit 14 is further configured to perform data conversion and adaptation on the first simulation unit 11, the second simulation unit 13, and the controller unit 12.

In an embodiment, since the first simulation unit 11, the second simulation unit 13, and the controller unit 12 may be different in data format, e.g., numerical system, abnormal interaction may occur in direct interaction. Therefore, data formats of the above three units may be matched with each other through the data interaction unit, for example, data received by a module is converted into a data format required by a target module to which the data may be sent to, and then the converted data is sent to the target module.

For instance, the first simulation unit 11 sends the hydrogen-production electrical parameter to the data interaction unit 14, and the data interaction unit 14 performs data conversion on the hydrogen-production electrical parameter and sends a converted hydrogen-production electrical parameter to the second simulation unit 13. The controller unit 12 sends the control instruction to the data interaction unit 14, and the data interaction unit 14 performs data conversion on the control instruction and sends a converted control instruction to the second simulation unit 13. The second simulation unit 13 sends the hydrogen production result to the data interaction unit 14, and the data interaction unit 14 performs data conversion on the hydrogen production result and sends a converted hydrogen production result to the controller unit 12.

In an embodiment, the data format of the first simulation unit 11 is, for instance, a first format, the data format of the second simulation unit 13 is, for instance, a second format, and the data format of the controller unit 12 is, for instance, a third format. For example, the first format, the second format, and the third format are different in the numerical system. The first simulation unit 11 sends the hydrogen-production electrical parameter in the first format to the data interaction unit 14, the data interaction unit 14 converts the hydrogen-production electrical parameter in the first format into data in the second format and sends the data in the second format to the second simulation unit 13. The controller unit 12 sends the control instruction in the third format to the data interaction unit 14, and the data interaction unit 14 converts the control instruction in the third format into data in the second format and sends the data in the second format to the second simulation unit 13. The second simulation unit 13 sends the hydrogen production result in the second format to the data interaction unit 14, and the data interaction unit 14 converts the hydrogen production result in the second format into a hydrogen production result in the third format and sends the hydrogen production result in the third format to the controller unit 12. In addition, the hydrogen production result may include feedback on the hydrogen-production process parameter, and the controller unit 12 is configured to modify the control instruction based on the feedback on the hydrogen-production process parameter. The hydrogen production result includes the feedback on the hydrogen-production process parameter (for instance, the feedback on the hydrogen-production process parameter may include temperature feedback, liquid level feedback, flow rate feedback, pressure feedback, or the like). The controller unit 12 may automatically modify the control instruction based on the feedback on the hydrogen-production process parameter, so as to regulate a simulation state of the second simulation unit, achieving closed-loop control on the simulation system for hydrogen production by water electrolysis (for instance, the closed-loop control on temperature, liquid level, flow rate, pressure, or the like), thereby ensuring stable operation of the hydrogen production process.

In an embodiment, the data interaction unit 14 is a first controller equipped with a software environment such as Python, C++, or java.

In an embodiment, the first controller may be, e.g., a server. The first controller is equipped with relevant software with the software environment such as Python, C++, and java, which can support multiple protocols, such as supporting communication protocols with the first simulation unit 11, the second simulation unit 13, and the controller unit 12. For another example, the control instruction is acquired from the controller unit based on Modbus protocol, and the control instruction is sent to the second simulation unit. The software environments such as Python, C++, and java have advantages of high flexibility and a large quantity of supported protocols. Therefore, the first controller equipped with the software environment such as Python, C++, or java may be implemented as the data interaction unit, so that functions of the data interaction unit can be concisely and conveniently implemented and have low development difficulty, thereby reducing the cost of the simulation system for hydrogen production by water electrolysis. It should be noted that the data interaction unit may also be a controller equipped with other software as long as the equipped software can interact with the first simulation unit, the second simulation unit and the controller unit.

In an embodiment, the first simulation unit 11 is a second controller equipped with the universal model for multi-domain systems.

In an embodiment, the second controller may be, e.g., a server. The second controller may be equipped with the universal model for multi-domain systems, such as, software Dymola. The software Dymola is a software platform that is modeled based on Modelica language and on which a power system model including distributed energy resources may be run, thereby greatly improving the accuracy of the simulation of the hydrogen-production electrical parameter. Further, the first simulation unit may be a controller equipped with other software for simulating the power system for hydrogen production, for example, equipped with software such as OpenModelica.

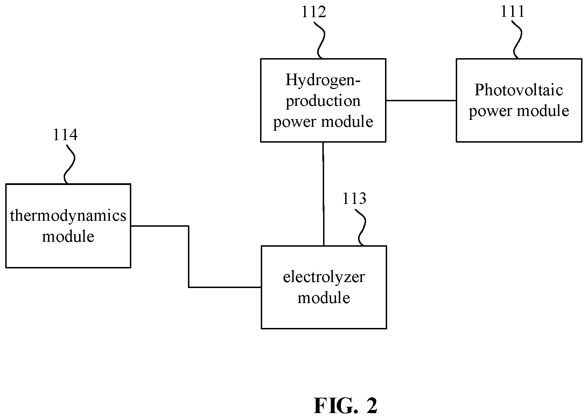

FIG. 2 is a schematic structural diagram showing a power system for hydrogen production in the first simulation unit according to an embodiment of the present disclosure. Referring to the FIG. 2, the first simulation unit includes a renewable energy module 111, a hydrogen-production power module 112, an electrolyzer module 113, and a thermodynamics module 114. The renewable energy module 111 is connected to the hydrogen-production power module 112 and is configured to simulate power generation with renewable energy. The hydrogen-production power module 112 is connected to the electrolyzer module 113 to supply power for the electrolyzer module 113. The thermodynamics module 114 is connected to the electrolyzer module 113 and is configured to obtain a temperature of the electrolyzer.

In an embodiment, the power system for hydrogen production is powered by solar power. That is, the renewable energy module 111 is a photovoltaic power generation module. In other implementations, wind power generation or bioenergy power generation is adopted, and the renewable energy module 111 is replaced with a wind power generation module or a bioenergy power generation module. Since electric energy generated by the renewable energy module 111 is unstable, the hydrogen-production power module 112 converts the electric energy generated by the renewable energy module 111 into direct current power that enables the electrolyzer module 113 to operate stably. The direct current power from the hydrogen-production power module 112 is applied to the electrolyzer module 113 for electrolysis. Since heat exchange may occur during electrolysis process, e.g., the temperature may increase or decrease, and the temperature of the electrolyzer 113 may be obtained by the thermodynamics module 114. In other implementations, for instance, in a case that a simulated chemical system for hydrogen production includes an electrolyzer, the first simulation unit may not include the electrolyzer module and the thermodynamics module. In addition, the structure of the power system for hydrogen production simulated by the first simulation unit may include more or less components, which is not limited herein.

In an embodiment, if the first simulation unit 11 is the second controller equipped with the universal model for multi-domain systems, a simulation process thereof includes: flattening source codes of the model; topologically sorting all equations based on a data dependency of the equations; for differential algebraic equations, transforming a coefficient matrix of the equations into a lower triangle matrix; eliminating, by an optimizer including an algebraic simplification algorithm and a symbolic index reduction algorithm, most of the equations to obtain a minimum set of equations; and generating a solver link for C code and numerical equations to solve the simplified equations after processing.

In an embodiment, the second simulation unit 13 is a third controller equipped with process simulation software.

In an embodiment, the third controller may be, e.g., a server. The third controller is equipped with process simulation software. In other implementations, the second simulation unit 13 may further be a controller equipped with other software as long as the equipped software can simulate the chemical system for hydrogen production.

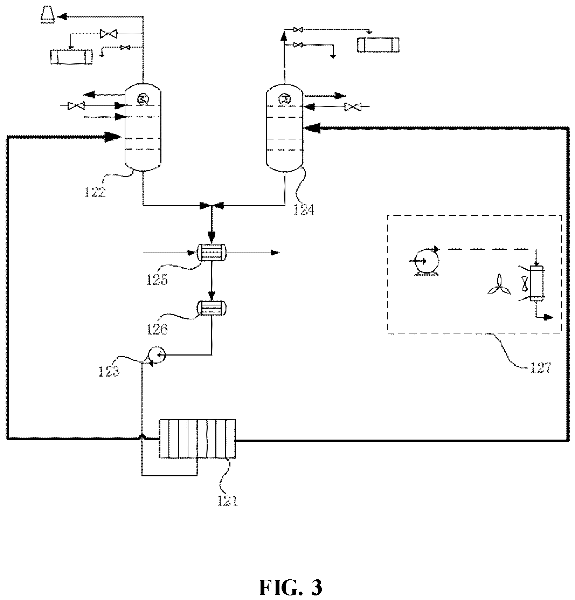

In an embodiment, FIG. 3 is a schematic structural diagram showing a chemical system for hydrogen production in a second simulation unit according to an embodiment of the present disclosure. Referring to the FIG. 3, the chemical system for hydrogen production in the second simulation unit includes a first circulation loop and a second circulation loop. The first circulation loop is formed by an electrolyzer 121, a gas-liquid separation cooler for hydrogen 122, and a lye circulating pump 123 that are connected end to end sequentially through a pipeline. The second circulation loop is formed by the electrolyzer 121, a gas-liquid separation cooler for oxygen 124, and the lye circulating pump 123 that are connected end to end sequentially through a pipeline.

In an embodiment, hydrogen produced by water electrolysis in the electrolyzer 121 enters the gas-liquid separation cooler for hydrogen 122. Liquid in the gas-liquid separation cooler for hydrogen 122 flows downward into the lye circulating pump 123 due to action of gravity. Oxygen produced in the electrolyzer 121 enters the gas-liquid separation cooler for oxygen 124. Liquid in the gas-liquid separation cooler for oxygen 124 also flows downward into the lye circulating pump 123 due to action of gravity. Lye in the lye circulating pump 123 eventually flows into the electrolyzer 121, thus completing a circulation process. The gas-liquid separation cooler for hydrogen 122 may include a cooling water outlet, a cooling water inlet, and a manual globe valve. In addition, the gas-liquid separation cooler for hydrogen 122 may include desalted water. The gas-liquid separation cooler for oxygen 124 may include a cooling water outlet, a cooling water inlet, a manual globe valve, and so on. The chemical system for hydrogen production may further include a cooling water system 127, which may specifically include a cooling water circulating pump, an air cooler, or other device. The chemical system for hydrogen production may further include a heat exchanger 125, a filter 126, or other device. The heat exchanger 125 and the filter 126 are connected in the first circulation loop and the second circulation loop by the pipelines, and are connected between the lye circulating pump 123 and a gas-liquid separation circulating pump. The chemical system for hydrogen production may further include an oxygen analyzer, a hydrogen purification process module, a hydrogen analyzer or other module.

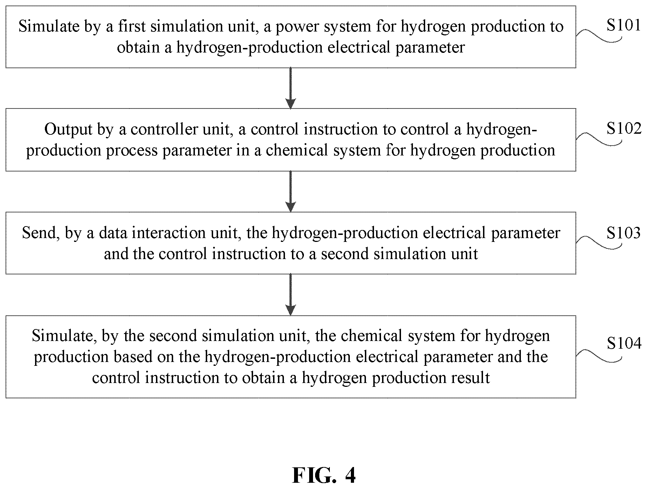

Referring to FIG. 4, a simulation method for hydrogen production by water electrolysis is further provided according to an embodiment of the present disclosure. FIG. 4 is a flowchart of a simulation method for hydrogen production by water electrolysis according to an embodiment of the present disclosure. The simulation method for hydrogen production by water electrolysis is performed by the simulation system for hydrogen production by water electrolysis according to any one of the embodiments of the present disclosure, and the simulation method includes the following steps S101 to S104.

In step S101, a power system for hydrogen production is simulated by a first simulation unit to obtain a hydrogen-production electrical parameter.

In step S102, a control instruction is outputted by a controller unit to control a hydrogen-production process parameter in a chemical system for hydrogen production;
In step S103, the hydrogen-production electrical parameter and the control instruction are sent by a data interaction unit to a second simulation unit.

In step S104, the chemical system for hydrogen production is simulated by the second simulation unit based on the hydrogen-production electrical parameter and the control instruction to obtain a hydrogen production result.

The first simulation unit, the controller unit, and the second simulation unit are different in interface, and thus fail to directly interact with each other, thus failing to achieve the co-simulation. Therefore, in this embodiment, the data interaction unit is configured to implement as an interface environment. The data interaction unit supports interface protocols of the first simulation unit, the second simulation unit and the controller unit, so that any of the first simulation unit, the second simulation unit, and the controller unit can interact with the data interaction unit. That is, the first simulation unit, the second simulation unit, and the controller unit can perform data interaction with each other through the data interaction unit, so as to simulate the complete process of the hydrogen production by water electrolysis. Since the controller unit is a hardware platform, the co-simulation of software and hardware is further implemented through the data interaction unit in the present disclosure.

It should be noted that an execution order of the step S101 and the step S102 is not limited.

In an embodiment, the simulation method for hydrogen production by water electrolysis further includes: controlling the one with a smaller simulation step size of the first simulation unit and the second simulation unit to operate first and controlling the other with a larger simulation step size to operate later, if the first simulation unit is different from the second simulation unit in simulation step size.

With the simulation method of hydrogen production by water electrolysis according to the embodiment, the data interaction unit is provided, so that any of the first simulation unit, the second simulation unit and the controller unit can interact with the data interaction unit. That is, the first simulation unit, the second simulation unit and the controller unit can perform data interaction with each other through the data interaction unit, so as to simulate the complete process of the hydrogen production by water electrolysis. In addition, the one with a smaller simulation step size of the first simulation unit and the second simulation unit is controlled to operate first, for instance, the first simulation unit simulates the hydrogen-production electrical parameter first. Then, the other with a larger simulation step size operates later, for instance, the second simulation unit performs simulation based on the hydrogen-production electrical parameter and the control instruction. That is, a simulation unit with a smaller simulation step size performs simulation first, and another simulation unit with a larger simulation step size performs simulation later, so as to solve the problem of failing to achieve the co-simulation due to different simulation units different in simulation step size.

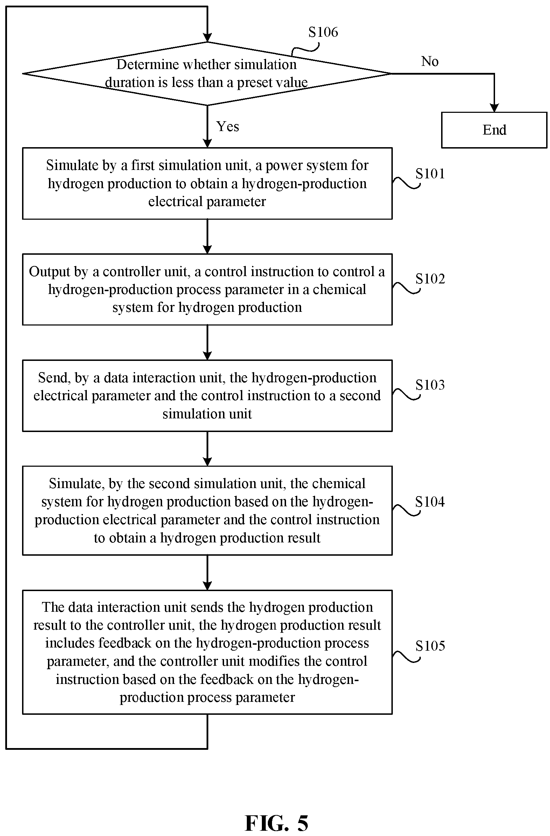

In an embodiment, FIG. 5 is a flowchart of a simulation method for hydrogen production by water electrolysis according to another embodiment of the present disclosure. Referring to the FIG. 5, after the chemical system for hydrogen production is simulated by the second simulation unit based on the hydrogen-production electrical parameter and the control instruction to obtain the hydrogen production result, the simulation method further includes the following step S105.

In step S105, the data interaction unit sends the hydrogen production result to the controller unit, where the hydrogen production result includes feedback on the hydrogen-production process parameter, and the controller unit modifies the control instruction based on the feedback on the hydrogen-production process parameter.

In an embodiment, the hydrogen production result includes the feedback on the hydrogen-production process parameter. The controller unit 12 may automatically modify the control instruction based on the feedback on the hydrogen-production process parameter, so as to regulate the simulation state of the second simulation unit, achieving the closed-loop control on the simulation system for hydrogen production by water electrolysis, thereby ensuring safe operation of the hydrogen production process.

In an embodiment, after the second simulation unit simulates the hydrogen production result, the data interaction unit sends the hydrogen production result to the controller unit. For example, a corresponding register value in the controller unit is modified to save the hydrogen production result. The control instruction outputted by the controller unit may be manually or automatically modified based on the hydrogen production result, so as to ensure safe operation of the hydrogen production process.

In an embodiment, referring to the FIG. 5, before the power system for hydrogen production is simulated by the first simulation unit to obtain the hydrogen-production electrical parameter, the simulation method further includes the following step S106.

In step S106, it is determined whether a simulation duration is less than a preset value.

If the simulation duration is less than the preset value, the step S101, i.e., the step of simulating by the first simulation unit, the power system for hydrogen production to obtain the hydrogen-production electrical parameter is performed. If the simulation duration is greater than or equal to the preset value, the simulation process ends.

After the data interaction unit sends the hydrogen production result to the controller unit, the simulation method further includes: continuing to the operation of determining whether a simulation duration is less than a preset value.

In an embodiment, the simulation method for hydrogen production in this embodiment is cyclically performed until the simulation duration exceeds the preset value, so as to simulate a result of a complete system for hydrogen production for a long-term operation. It should be noted that before the step S106, the simulation method may further include a modeling process for software environment such as Python, C++, or java, establishing a TCP link, initializing, creating a calling link for process simulation software, and setting the preset value of system operation and a FMU interval duration. Then, the step S106 is performed.

It should be noted that the above descriptions show only preferred embodiments and technical principles of the present disclosure. Those skilled in the art should understand that the present disclosure is not limited to the embodiments described above. Those skilled in the art may make various variations, modifications, and substitutions without departing from the protection scope of the present disclosure. Therefore, although the present disclosure is described in detail through the above embodiments, the present disclosure is not limited to the above embodiments. The present disclosure may further include more other equivalent embodiments without departing from the concept of the present disclosure, and the present disclosure should fall within the scope of the claims.

## Claims

1. A simulation system for hydrogen production by water electrolysis, comprising:
a first simulation unit, configured to simulate a power system for hydrogen production to obtain a hydrogen-production electrical parameter;
a controller unit, configured to output a control instruction to control a hydrogen-production process parameter in a chemical system for hydrogen production;
a second simulation unit, configured to simulate the chemical system for hydrogen production based on the hydrogen-production electrical parameter and the control instruction to obtain a hydrogen production result; and
a data interaction unit, wherein the first simulation unit, the controller unit, and the second simulation unit perform data interaction with each other through the data interaction unit.

2. The simulation system for hydrogen production by water electrolysis according to claim 1, wherein the data interaction unit is further configured to control the one with a smaller simulation step size of the first simulation unit and the second simulation unit to operate first, if the first simulation unit is different from the second simulation unit in simulation step size.

3. The simulation system for hydrogen production by water electrolysis according to claim 1, wherein the data interaction unit is provided with a first data interface adapted to the first simulation unit, a second data interface adapted to the second simulation unit, and a third data interface adapted to the controller unit.

4. The simulation system for hydrogen production by water electrolysis according to claim 1, wherein the data interaction unit is further configured to perform data conversion and adaptation on the first simulation unit, the second simulation unit, and the controller unit.

5. The simulation system for hydrogen production by water electrolysis according to claim 4, wherein the first simulation unit, the controller unit, and the second simulation unit performing data interaction with each other through the data interaction unit comprises:
sending, by the first simulation unit, the hydrogen-production electrical parameter to the data interaction unit, performing, by the data interaction unit, data conversion on the hydrogen-production electrical parameter, and sending, by the data interaction unit, a converted hydrogen-production electrical parameter to the second simulation unit;
sending, by the controller unit, the control instruction to the data interaction unit, performing, by the data interaction unit, data conversion on the control instruction, and sending, by the data interaction unit, a converted control instruction to the second simulation unit; and
sending, by the second simulation unit, the hydrogen production result to the data interaction unit, performing, by the data interaction unit, data conversion on the hydrogen production result, and sending, by the data interaction unit, a converted hydrogen production result to the controller unit.

6. The simulation system for hydrogen production by water electrolysis according to claim 5, wherein the hydrogen production result comprises feedback on the hydrogen-production process parameter,
wherein the controller unit is configured to modify the control instruction based on the feedback on the hydrogen-production process parameter.

7. The simulation system for hydrogen production by water electrolysis according to claim 1, wherein the data interaction unit is a first controller equipped with a software environment of Python, C++, or java.

8. The simulation system for hydrogen production by water electrolysis according to claim 1, wherein the controller unit comprises a programmable logic controller.

9. The simulation system for hydrogen production by water electrolysis according to claim 1, wherein the first simulation unit is a second controller equipped with a universal model for multi-domain systems.

10. The simulation system for hydrogen production by water electrolysis according to claim 9, wherein the first simulation unit comprises a thermodynamics module, a renewable energy module, a hydrogen-production power module, and an electrolyzer module,
wherein the renewable energy module is connected to the hydrogen-production power module and is configured to simulate power generation with renewable energy;
the hydrogen-production power module is connected to the electrolyzer module and is configured to supply power for the electrolyzer module; and
the thermodynamics module is connected to the electrolyzer module and is configured to obtain a temperature of the electrolyzer module.

11. The simulation system for hydrogen production by water electrolysis according to claim 1, wherein the second simulation unit is a third controller equipped with process simulation software.

12. The simulation system for hydrogen production by water electrolysis according to claim 11, wherein the second simulation unit comprises:
a first circulation loop, formed by an electrolyzer, a gas-liquid separation cooler for hydrogen, and a lye circulating pump that are connected end to end sequentially through a pipeline; and
a second circulation loop, formed by a gas-liquid separation cooler for oxygen, the electrolyzer, and the lye circulating pump that are connected end to end sequentially through a pipeline.

13. A simulation method for hydrogen production by water electrolysis, performed by the simulation system for hydrogen production by water electrolysis according to any one of claims 1 to 12, and the simulation method for hydrogen production by water electrolysis comprising:
simulating, by a first simulation unit, a power system for hydrogen production to obtain a hydrogen-production electrical parameter;
outputting, by a controller unit, a control instruction to control a hydrogen-production process parameter in a chemical system for hydrogen production;
sending, by a data interaction unit, the hydrogen-production electrical parameter and the control instruction to a second simulation unit; and
simulating, by the second simulation unit, the chemical system for hydrogen production based on the hydrogen-production electrical parameter and the control instruction to obtain a hydrogen production result.

14. The simulation method for hydrogen production by water electrolysis according to claim 13, further comprising:
controlling the one with a smaller simulation step size of the first simulation unit and the second simulation unit to operate first and controlling the other with a larger simulation step size to operate later, if the first simulation unit is different from the second simulation unit in simulation step size.

15. The simulation method for hydrogen production by water electrolysis according to claim 13, wherein after the simulating, by the second simulation unit, the chemical system for hydrogen production based on the hydrogen-production electrical parameter and the control instruction to obtain a hydrogen production result, the simulation method further comprises:
sending, by the data interaction unit, the hydrogen production result to the controller unit; wherein the hydrogen production result comprises feedback on the hydrogen-production process parameter; and
modifying, by the controller unit, the control instruction based on the feedback on the hydrogen-production process parameter.

16. The simulation method for hydrogen production by water electrolysis according to claim 15, wherein before the simulating, by a first simulation unit, a power system for hydrogen production to obtain a hydrogen-production electrical parameter, the simulation method further comprises:
determining whether a simulation duration is less than a preset value;
performing the step of simulating, by the first simulation unit, the power system for hydrogen production to obtain the hydrogen-production electrical parameter if the simulation duration is less than a preset value; and
ending the simulation process if the simulation duration is greater than or equal to the preset value,
wherein after the sending, by the data interaction unit, the hydrogen production result to the controller unit, the simulation method further comprises:
continuing to the operation of determining whether a simulation duration is less than a preset value.
